Europäisches Patentamt

European Patent Office

Office européen des brevets

(19)

(11) Numéro de publication: **0 260 438 B1**

(12) **FASCICULE DE BREVET EUROPEEN**

(45) Date de publication de fascicule du brevet:
27.02.91

(51) Int. Cl.⁵: **B23Q 15/22**

(21) Numéro de dépôt: **87111673.7**

(22) Date de dépôt: **12.08.87**

(54) **Dispositif sans fil pour la commande de la vitesse d'avance d'un outil vers une pièce à usiner.**

(30) Priorité: **01.09.86 FR 8612351**

(43) Date de publication de la demande:
**23.03.88 Bulletin 88/12**

(45) Mention de la délivrance du brevet:
**27.02.91 Bulletin 91/09**

(84) Etats contractants désignés:
**CH DE GB IT LI**

(56) Documents cités:
**FR-A- 2 382 310**
**GB-A- 2 126 758**
**US-A- 4 145 816**

(73) Titulaire: **MESELTRON S.A.**
**Avenue Beauregard 14/18**
**CH-2035 Corcelles(CH)**

(72) Inventeur: **Sigg, Hans**
**Charmettes 15**
**CH-2006 Neuchâtel(CH)**

(74) Mandataire: **de Raemy, Jacques et al**
**ICB Ingénieurs Conseils en Brevets SA Passage Max. Meuron 6**
**CH-2001 Neuchâtel(CH)**

Rank Xerox (UK) Business Services

## Description

La présente invention est relative à un dispositif pour réduire la vitesse d'avance d'un outil d'une machine-outil vers une pièce à usiner dès que l'outil est entré en contact avec la pièce, la pièce à usiner étant entraînée en rotation au moyen d'un porte-pièce comportant un axe d'entraînement et un organe de serrage dans lequel ladite pièce est fixée, dispositif comprenant un capteur de vibrations susceptible de détecter un signal émis à l'instant dudit contact, un circuit électronique de transmission dudit signal et un moteur obéissant audit circuit pour régler la vitesse d'avance dudit outil.

En règle générale, l'approche d'un outil de la pièce à usiner dans les machines-outils est réalisée avec une vitesse relativement élevée afin de réduire autant que possible les temps morts de la machine. Cependant, lorsque l'outil vient en contact avec la pièce à usiner, il convient de réduire très rapidement cette vitesse d'avance élevée pour éviter des détériorations tant de l'outil que de la pièce à usiner.

On connaît depuis longtemps des dispositifs utilisés notamment dans les meuleuses ou les rectifieuses qui comportent un capteur acoustique, de préférence de type piézo-électrique, destiné à détecter l'émission acoustique qui est engendrée lorsque la meule touche la pièce à usiner, le signal ainsi obtenu étant utilisé, après amplification, pour réduire, le cas échéant jusqu'à zéro, la vitesse relativement élevée utilisée lors de la phase d'approche.

Un tel dispositif peut également être mis à profit pour arrêter la machine en cas de collision accidentelle entre l'outil et la pièce à usiner. Une collision peut être provoquée par exemple par une mise en place défectueuse de la pièce, ce qui peut entraîner d'importants dégats et des blessures à l'ouvrier desservant.

Un tel dispositif est décrit par exemple dans le brevet CH-A-585609 où le capteur est fixé sur la poupée porte-pièce faisant corps avec le bâti de la machine. On trouve également des arrangements où le capteur est fixé sur la poupée porte-meule.

Toutefois ces dispositifs connus présentent un inconvénient qui consiste en ce que le bruit inhérent, engendré par l'outil lorsqu'il vient en contact avec la pièce à travailler, ne se différencie que très peu en intensité et en fréquence des bruits parasites produits par la machine, par exemple des bruits des paliers, des engrenages, des organes d'entraînement pneumatiques ou hydrauliques etc., si bien que le bon fonctionnement du dispositif ne peut pas toujours être assuré.

Dans le cas où le capteur est fixé sur la poupée porte-pièce, le signal utile, c'est-à-dire celui qui est produit lorsque la meule vient en contact avec la pièce à usiner, doit passer par les paliers supportant l'axe porte-pièce avant d'atteindre le capteur, ce qui représente une résistance importante à la transmission des vibrations produites au moment de ce contact. De même, dans le cas où le capteur est fixé sur la poupée porte-meule, le bruit utile doit passer par les paliers supportant l'axe de la meule qui en eux-mêmes sont des générateurs de vibrations importantes dues surtout à la vitesse de rotation élevée de la meule.

Si, dans des cas bien précis d'usinage, adaptés surtout aux machines à usiner des diamètres extérieurs de pièces, les dispositifs décrits ci-dessus se sont montrés très utiles en fonctionnent à satisfaction, le problème se complique lorsqu'il s'agit d'aléser des diamètres intérieurs de pièces. Dans ce dernier cas en effet, le signal utile à détecter présente une amplitude très réduite due surtout aux petites dimensions de la meule ainsi qu'à la faible force d'appui de la meule contre la pièce. Il sera donc difficile de faire la distinction entre le signal utile et le signal parasite provoqué par la machine, le premier se trouvant noyé dans le second.

Pour éviter les inconvénients cités plus haut, la présente invention est caractérisée par le fait que le capteur de vibrations est fixé sur la porte-pièce et est entraîné en rotation avec lui et que le circuit électronique de transmission comporte un émetteur fixé également sur le porte-pièce et recevant le signal issu dudit capteur pour émettre une information représentative dudit signal et un récepteur disposé à poste fixe sur le bâti de la machine et arrangé pour recevoir ladite information sans liaison câblée.

L'invention sera mieux comprise maintenant à la lecture de la description qui va suivre, donnée uniquement à titre d'exemple et faite en se référant au dessin dans lequel:
- La figure 1 montre un dessin schématisé d'une meuleuse-rectifieuse sur laquelle est monté le dispositif suivant l'invention et comportant un émetteur solidaire du mandrin de la machine et un récepteur fixe pour recevoir le signal issu de l'émetteur et commander l'avance de l'outil.
- La figure 2 montre en détail une réalisation possible de l'émetteur présenté en figure 1.
- La figure 3 est une forme particulière de réalisation de l'antenne de l'émetteur de la figure 2 et
- La figure 4 présente une forme particulière de couplage entre l'émetteur et le récepteur montrés en figure 1.

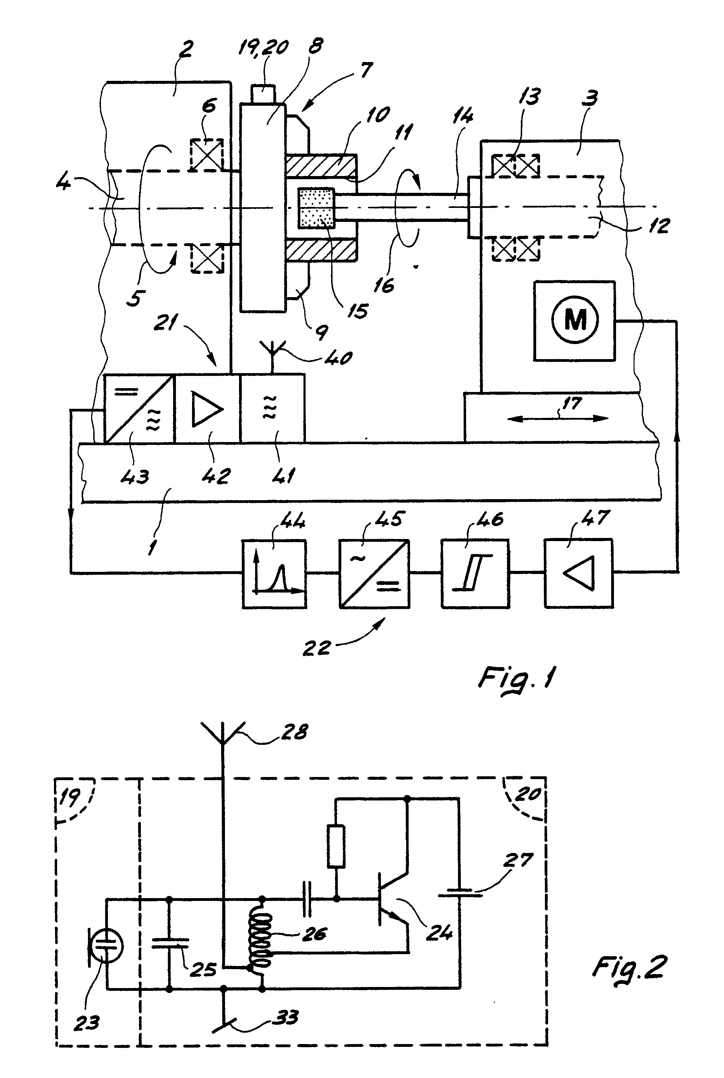

La figure 1 montre un dessin simplifié d'une meuleuse-rectifieuse équipée du dispositif selon l'invention. Cette machine comprend un bâti 1 sur lequel repose une poupée porte-pièce 2 et une poupée porte-meule 3. La poupée porte-pièce comprend un axe porte-pièce 4 qui est entraîné en rotation dans le sens de la flèche 5 par un moteur non représenté. L'axe 4 est solidaire de la poupée 2 par l'intermédiaire de paliers dont un seul 6 est figuré au dessin. A l'extrémité de l'axe 4 est assujetti un organe de serrage 7 comportant essentiellement un mandrin 8 avec ses mors 9. Une pièce à usiner 10 est fixée dans l'organe de serrage 7. La pièce à usiner 10 se présente ici sous la forme d'un cylindre dont il s'agit d'aléser la paroi intérieure 11.

La poupée porte-meule 3 comprend un axe 12 supporté par des paliers dont un seul 13 est représenté au dessin. En prolongement de l'axe 12 se trouve fixée une broche porte-meule 14 au bout de laquelle se trouve la meule proprement dite 15. La broche est entraînée en rotation à grande vitesse dans le sens de la flèche 16 par un moteur non représenté. En plus de la rotation sur elle-même la meule est animée d'un mouvement alternatif de translation dans le sens horizontal. Ce mouvement lui est imparti en déplaçant la poupée 3 dans le sens des flèches 17 au moyen d'un moteur non représenté. La broche 14 peut également se déplacer dans le sens perpendiculaire au dessin. Ce mouvement est commandé par le moteur M. Avant l'opération de meulage, la meule 15 est tenue à bonne distance de la paroi intérieure 11, puis s'avance ensuite à grande vitesse en direction de cette paroi. Dès que la meule entre en contact avec ladite paroi, on réduit considérablement la vitesse d'avance comme cela a été exposé dans le préambule de la présente description. Selon l'état de la technique connu à ce jour, cette réduction de vitesse est réalisée soit manuellement soit automatiquement. Dans le premier cas c'est le desservant de la machine qui réduit la vitesse dès qu'il aperçoit des étincelles ou qu'il entend un bruit. Dans le second cas une vitesse plus lente peut être impartie au moteur automatiquement avant l'impact, ce qui n'ira pas sans une perte de temps.

Pour éviter les inconvénients énumérés dans le préambule, la présente invention propose de fixer le capteur de vibration 19 directement sur le porte-pièce et plus particulièrement sur l'organe de serrage 7 dont fait partie le mandrin 8. Comme il ne vient pas en question, selon cette disposition, de relier le capteur au moteur M au moyen d'une liaison câblée, on aura recours à un émetteur 20 disposé à proximité du capteur 19 et susceptible d'émettre une information représentative du signal délivré par le capteur, signal engendré par le contact de la meule avec la pièce à usiner. Ainsi capteur 19 et émetteur 20 sont entraînés en rotation avec le mandrin 8. La figure 1 montre encore que le dispositif comporte un récepteur 21 disposé à poste fixe sur le bâti de la machine, récepteur arrangé pour recevoir l'information émise par l'émetteur 20. Cette information est alors transmise au moteur M par l'entremise d'un circuit 22 de traitement du signal comme cela est connu de documents antérieurs.

On voit immédiatement les avantages apportés par l'invention: les vibrations engendrées par l'entrée en contact de l'outil avec la pièce à usiner suivent un chemin direct entre la source de bruit et le capteur sans devoir passer par des paliers ou roulements comme ce serait le cas si le capteur était fixé sur le bâti 1 de la machine ou la poupée porte-pièce 2. L'invention permet également une mesure qui est effectuée à proximité presque immédiate de la source de bruit, ce qui est très favorable et rejette ainsi les bruits parasites dans un bruit de fond de faible amplitude.

Comme le montre la figure 1, le capteur 19 et l'émetteur 20 sont attachés au mandrin 8. D'autres solutions seraient cependant possibles, comme celle qui consisterait à fixer capteur et émetteur sur l'axe d'entraînement 4. Cette façon de faire présenterait l'avantage d'un système plus universel puisque construit une fois pour toutes à l'intérieur de la poupée porte-pièce 2. Dans ce cas le récepteur 21 serait aussi disposé à l'intérieur de la poupée 2.

Le dispositif selon l'invention, en plus qu'il comporte un capteur de vibration entraîné avec l'organe de serrage de la pièce à usiner, comprend donc un circuit électronique de transmission du signal vers le moteur M qui commande à son tour l'avance de la broche 14 dans le sens perpendiculaire à la figure 1. On a vu que ce circuit de transmission comprend un émetteur mobile 20 et un récepteur fixe 21. On peut imaginer plusieurs sortes d'émetteurs et de récepteurs et les lignes qui vont suivre décriront quelques systèmes susceptibles d'être utilisés, sans en dresser un inventaire exhaustif.

La figure 2 montre un capteur de vibration 19 lié à un émetteur d'ondes électromagnétiques radio 20. Le capteur 19 comporte un microphone à condensateur 23. L'émetteur 20 comprend un oscillateur formé par le transistor npn 24, le condensateur 25 et la self 26. Il est alimenté par une source d'alimentation autonome 27 (pile). Le schéma présenté est celui d'un émetteur modulé en fréquence par le microphone à condensateur 23. L'émetteur rayonne son énergie par l'antenne 28.

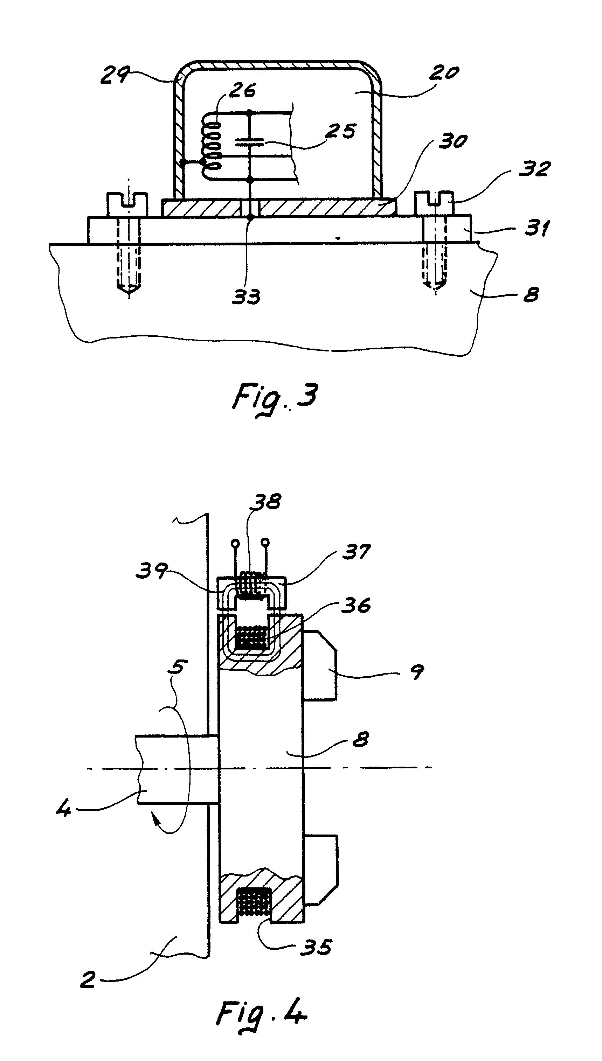

La figure 3 montre un arrangement particulier de l'émetteur 20 qui est encapsulé dans un boîtier métallique 29 lequel sert d'antenne à l'émetteur. Dans ce cas le boîtier 29 est isolé du mandrin 8 par une plaque isolante 30. La mise à la masse 33 due circuit émetteur est réalisée par une base métallique 31 fixée au mandrin 8 au moyen de vis 32.

Dans le cas particulier de la figure 3, il n'a pas été utilisé de capteur de vibrations proprement dit, les vibrations étant directement détectées par un condensateur 25 ou une self 26 de facture spéciale. Ainsi le condensateur 25 peut être d'un type dit microphonique, comme c'est le cas de certains condensateurs céramiques. Il présente alors une capacité qui varie en fonction des vibrations auxquelles il est soumis. De ce fait il module directement en fréquence le circuit oscillant formé par ledit condensateur et la self 26. De même la self 26 peut être du type à inductivité variable en fonction des vibrations auxquelles elle est soumise. Il pourrait s'agir d'une self à noyau magnétostrictif par exemple. Dans ce cas c'est la self, agissant comme capteur, qui module directement l'émetteur en fréquence.

Les exemples ci-dessus concernent un émetteur modulé en fréquence. Il est bien clair que d'autres formes de modulation pourraient être utilisées sans s'écarter de l'objet de l'invention. C'est ainsi que l'on pourrait utiliser aussi une modulation d'amplitude ou de phase ou encore par impulsions. La modulation par impulsions obéissant à un code binaire par exemple pourrait être mise en oeuvre dans une transmission par infra-rouge, transmission qui sera évoquée plus loin.

Un autre moyen de transmission du signal délivré par un capteur de vibration est présenté en figure 4. Le mandrin 8 comporte une gorge 35 dans laquelle est logée une bobine primaire 36. Cette bobine reçoit le signal émis à l'instant du contact de la meule avec la pièce à usiner, signal provenant d'un capteur et d'un amplificateur logés dans le mandrin, mais non représentés au dessin. Sur la périphérie du mandrin 8 se trouve un noyau fixe 37 en forme de U autour duquel est enroulé une bobine secondaire fixe 38. Le signal issu de la bobine tournante 36 est transmis à la bobine fixe 38 par induction magnétique, matérialisée ici par les lignes de champ 39. Le signal recueilli aux bornes de la bobine 38 est ensuite exploité pour agir sur le moteur M de la figure 1.

A propos de la figure 4 il est intéressant de noter qu'un même dispositif pourrait être mis en oeuvre pour alimenter en énergie l'émetteur faisant corps avec le mandrin 8 et ceci à la manière d'un transformateur.

Un autre moyen de transmission du signal engendré par le capteur peut être celui utilisant la lumière comme onde porteuse. Cette lumière peut rayonner dans le visible ou l'infra-rouge. La transmission par infra-rouge est très utilisée aujourd'hui. Un exemple frappant est celui de la commande de récepteurs TV. Dans l'application à la présente invention, un émetteur infra-rouge modulé par le capteur de vibration est logé dans le mandrin porte-pièce et y est disposé de façon à être perçu directement par une cellule sensible à un tel rayonnement et disposée à poste fixe sur le bâti de la machine. Comme le mandrin tourne, il y aura lieu de placer sur sa périphérie plusieurs émetteurs infra-rouges et disposés par exemple de la façon proposée par la société Renishaw pour sa tête de mesure du type MP7. Ainsi un de ces émetteurs sera toujours en vision directe du récepteur.

Reste à dire maintenant quelques mots sur le récepteur équipant le dispositif selon l'invention. Dans le cas où l'onde émise par l'émetteur est une onde électromagnétique radio, le récepteur sera adapté à ladite onde et se présentera sous la forme illustrée en figure 1 et en référence 21. Le récepteur reçoit l'information émise par l'émetteur sur son antenne 40. Le signal passe d'abord par un filtre 41 accordé sur la fréquence émise, et amplifié en 42, puis démodulé en 43. A noter que si on a affaire à une modulation de fréquence, le démodulateur 43 est un discriminateur de fréquence à la sortie duquel on recueille le signal utile engendré par le contact de la meule sur la pièce à usiner. Le signal utile est ensuite traité par le circuit électronique 22 qui comporte un filtre passe-bande 44 accordé sur la fréquence du signal, un redresseur 45 qui transforme ce signal en signal continu, un comparateur 46 qui compare le signal continu à un signal de référence. Si le signal continu est plus grand que le signal de référence, le comparateur émet à son tour un signal de commande qui excite un circuit de puissance 47 qui assure alors la commande du moteur M et permet notamment d'en réduire la vitesse. En soi le circuit de traitement est connu du brevet CH-A-585609 déjà cité et le moteur M pourrait être du même type que celui décrit dans le même brevet.

On a déjà dit pourquoi le dispositif décrit convient particulièrement bien aux machines à rectifier les diamètres intérieurs. Il pourrait cependant être étendu aux machines à rectifier les diamètres extérieurs.

**Revendications**

1. Dispositif pour réduire la vitesse d'avance d'un outil (15) d'une machine-outil vers une pièce à usiner (10) dès que l'outil est entré en contact avec la pièce, la pièce à usiner étant entraînée en rotation au moyen d'un porte-pièce comportant un axe d'entraînement (4) et un organe de serrage (7) dans lequel ladite pièce est fixée, dispositif comprenant un capteur de vibrations (19) susceptible de détecter un signal émis à l'instant dudit contact, un circuit électronique de transmission dudit signal et un moteur (M) obéissant audit circuit pour régler la vitesse d'avance dudit outil, caractérisé par le fait que le capteur de vibrations est fixé sur le porte-pièce et est entraîné avec lui et que le circuit électronique de transmission comporte un émetteur (20) fixé également sur le porte-pièce et recevant le signal issu dudit capteur pour émettre une information représentative dudit signal et un récepteur (21) disposé à poste fixe sur le bâti de la machine et arrangé pour recevoir ladite information sans liaison câblée.

2.  Dispositif selon la revendication 1, caractérisé par le fait qui le capteur (19) et l'émetteur (20) sont fixés sur l'organe de serrage (7).

3.  Dispositif selon la revendication 1, caractérisé par le fait que la transmission du signal de l'émetteur au récepteur est réalisée par induction magnétique au moyen de bobines de couplage (36, 38).

4.  Dispositif selon la revendication 1, caractérisé par le fait que la transmission du signal de l'émetteur au récepteur est réalisée au moyen d'ondes électromagnétiques rayonnant dans le spectre visible ou infra-rouge.

5.  Dispositif selon la revendication 1, caractérisé par le fait que la transmission du signal de l'émetteur au récepteur est réalisée au moyen d'ondes électromagnétiques radio.

6.  Dispositif selon la revendication 5, caractérisé par le fait que l'émetteur (20) est recouvert d'un boîtier métallique (29) pour servir d'antenne au rayonnement des ondes électromagnétiques radio.

7.  Dispositif selon la revendication 5, caractérisé par le fait que l'émetteur (20) est modulé en fréquence par le signal issu du capteur.

8.  Dispositif selon la revendication 7, caractérisé par le fait que le capteur est un condensateur (25) sensible aux vibrations créées par le contact de l'outil avec la pièce à usiner, ledit condensateur étant utilisé pour moduler l'émetteur en fréquence.

9.  Dispositif selon la revendication 7, caractérisé par le fait que le capteur est un microphone à condensateur (23) sensible aux vibrations créées par le contact de l'outil avec la pièce à usiner, ledit microphone étant utilisé pour moduler l'émetteur en fréquence.

10. Dispositif selon la revendication 7, caractérisé par le fait que le capteur est une self (26) dont l'inductivité varie en fonction des vibrations créées par le contact de l'outil avec la pièce à usiner, ladite self étant utilisée pour moduler l'émetteur en fréquence.

## Claims

1.  Arrangement for reducing the speed of advance of a tool member (15) of a machine tool toward a work-piece (10) as soon as said tool member has contacted said workpiece, the workpiece being driven in rotation by means of a carrier including a driving spindle (4) and a chuck (7) in which said workpiece is held, such arrangement comprising a vibration sensor (19) adapted to detect a signal emitted at the instant of said contact, an electronic circuit for transmitting said signal and a motor (M) responding to said circuit so as to regulate the speed of advance of said tool member, characterized by the fact that the vibration sensor is fixed to said carrier and driven in rotation therewith, and that the electronic transmitting circuit includes broadcasting means (20) likewise fixed to the carrier and receiving the signal from said vibration sensor thereby to emit information representative of said signal and a receiver (21) placed at a station fastened to the machine tool framework and arranged to receive said information in the absence of any cabled connection.

2.  Arrangement according to claim 1, characterized by the fact that the sensor (19) and the broadcasting means (20) are fixed to the chuck (7).

3.  Arrangement according to claim 1, characterized by the fact that transmission of the signal from the broadcasting means to the receiver is obtained through magnetic induction by means of coupling windings (36, 38).

4.  Arrangement according to claim 1, characterized by the fact that transmission of the signal from the broadcasting means to the receiver is obtained by means of electromagnetic waves radiating in the visible or infra-red spectrum.

5.  Arrangement according to claim 1, characterized by the fact that transmission of the signal from the broadcasting means to the receiver is obtained by means of electromagnetic radio waves.

6.  Arrangement according to claim 5, characterized by the fact that the broadcasting means (20) is encased in a metallic housing (29) which serves as a broadcasting antenna for the electromagnetic radio waves.

7. Arrangement according to claim 5, characterized by the fact that the broadcasting means (20) is frequency modulated by the signal from the sensor.

8. Arrangement according to claim 7, characterized by the fact that the sensor is a capacitor (25) sensitive to vibrations arising from contact of the tool member with the workpiece, said capacitor being employed to modulate the frequency of the broadcasting means.

9. Arrangement according to claim 7, characterized by the fact that the sensor is a condenser microphone (23) sensitive to vibrations arising from contact of the tool member with the workpiece, said microphone being employed to modulate the frequency of the broadcasting means.

10. Arrangement according to claim 7, characterized by the fact that the sensor is a self-inductance (26), the inductivity of which varies as a function of the vibrations arising from contact of the tool member with the workpiece, said self-inductance being employed to modulate the frequency of the broadcasting means.

**Ansprüche**

1. Vorrichtung zum Herabsetzen der Vorschubgeschwindigkeit eines Werkzeugs (15) einer Werkzeugmaschine in Richtung eines Werkstücks (10), sobald das Werkzeug in Kontakt mit dem Werkstück gelangt, welches Werkstück mittels eines Werkstückträgers mit einer Antriebsachse (4) und einem Spannorgan (7), in dem das Werkstück fixiert ist, zur Drehung angetrieben ist, welche Vorrichtung einen Vibrationsfühler (19) umfaßt, der ein im Augenblick des Kontakts emittiertes Signal erfassen kann, einen elektronischen Übertragungsschaltkreis des Signals umfaßt, und einen Motor (M) umfaßt, der dem Schaltkreis untergeordnet ist zum Regeln der Vorschubgeschwindigkeit des Werkzeugs, dadurch gekennzeichnet, daß der Vibrationsfühler am Werkstückträger befestigt ist und mit diesem zur Drehung angetrieben ist und daß der elektronische Übertragungsschaltkreis einen Sender (20) umfaßt, der ebenfalls an dem Werkstückträger befestigt ist und das von dem Fühler abgegebene Signal empfängt zum Emittieren einer für dieses Signal repräsentativen Information, sowie einen am Maschinengestell an fester Stelle angeordneten Empfänger (21), ausgebildet zum drahtlosen Empfang der Information.

2. Vorrichtung nach Anspruch 1, dadurch gekennzeichnet, daß der Fühler (19) und der Sender (20) am Spannorgan (7) befestigt sind.

3. Vorrichtung nach Anspruch 1, dadurch gekennzeichnet, daß die Übertragung des Signals vom Sender zum Empfänger durch magnetische Induktion mittels Kopplungsspulen (36, 38) erfolgt.

4. Vorrichtung nach Anspruch 1, dadurch gekennzeichnet, daß die Übertragung des Signals vom Sender zum Empfänger mittels im sichtbaren oder infraroten Spektrum strahlender elektromagnetischer Wellen erfolgt.

5. Vorrichtung nach Anspruch 1, dadurch gekennzeichnet, daß die Übertragung des Signals vom Sender zum Empfänger mittels elektromagnetischer Funkwellen erfolgt.

6. Vorrichtung nach Anspruch 5; dadurch gekennzeichnet, daß der Sender (20) von einem metallischen Gehäuse (29) abgedeckt ist, um als Strahlungsantenne der elektromagnetischen Funkwellen zu dienen.

7. Vorrichtung nach Anspruch 5, dadurch gekennzeichnet, daß der Sender (20) durch das von dem Fühler abgegebene Signal frequenzmoduliert ist.

8. Vorrichtung nach Anspruch 7, dadurch gekennzeichnet, daß der Fühler ein gegenüber Vibrationen, erzeugt durch den Kontakt des Werkzeugs mit dem Werkstück, empfindlicher Kondensator (25) ist, der verwendet wird, um den Sender in der Frequenz zu modulieren.

9. Vorrichtung nach Anspruch 7, dadurch gekennzeichnet, daß der Fühler ein gegenüber Vibrationen, erzeugt durch den Kontakt des Werkzeugs mit dem Werkstück, empfindliches Kondensatormikrophon ist, das verwendet wird, um den Sender in der Frequenz zu modulieren.

10. Vorrichtung nach Anspruch 7, dadurch gekennzeichnet, daß der Fühler eine Selbstinduktionsspule (26) ist, deren Induktivität sich in Abhängigkeit von Vibrationen ändert, erzeugt durch den Kontakt des Werkzeugs mit dem Werkstück, welche Selbstinduktionsspule verwendet wird, um den Sender in der Frequenz zu mo-

dulieren.

Fig.1

Fig.2

**Fig. 3**

**Fig. 4**